Europäisches Patentamt

European Patent Office

Office européen des brevets

(11) Publication number: 0 275 947
A2

# EUROPEAN PATENT APPLICATION

(21) Application number: 88100560.7

(51) Int. Cl.⁴: **G02B 5/32** , G02B 6/26

(22) Date of filing: 16.01.88

(30) Priority: 20.01.87 US 5173

(43) Date of publication of application:
27.07.88 Bulletin 88/30

(84) Designated Contracting States:
DE FR GB IT

(71) Applicant: HONEYWELL INC.
Honeywell Plaza
Minneapolis Minnesota 55440(US)

(72) Inventor: Droessler, Justin G.
8141 River View Terrace
Fridley Minnesota 55432(US)
Inventor: Mostrom, Richard N.
129 Darrow Lane
Greenlawn New York 11740(US)
Inventor: Steadman, Sherman S.
5684 Wylmoor Drive N.W.
Norcross Georgia 30093(US)

(74) Representative: Rentzsch, Heinz et al
Honeywell Europe S.A. Holding KG Patent-
und Lizenzabteilung Postfach 10 08 65
D-6050 Offenbach am Main(DE)

(54) Image enhancement for fiber optics transmission.

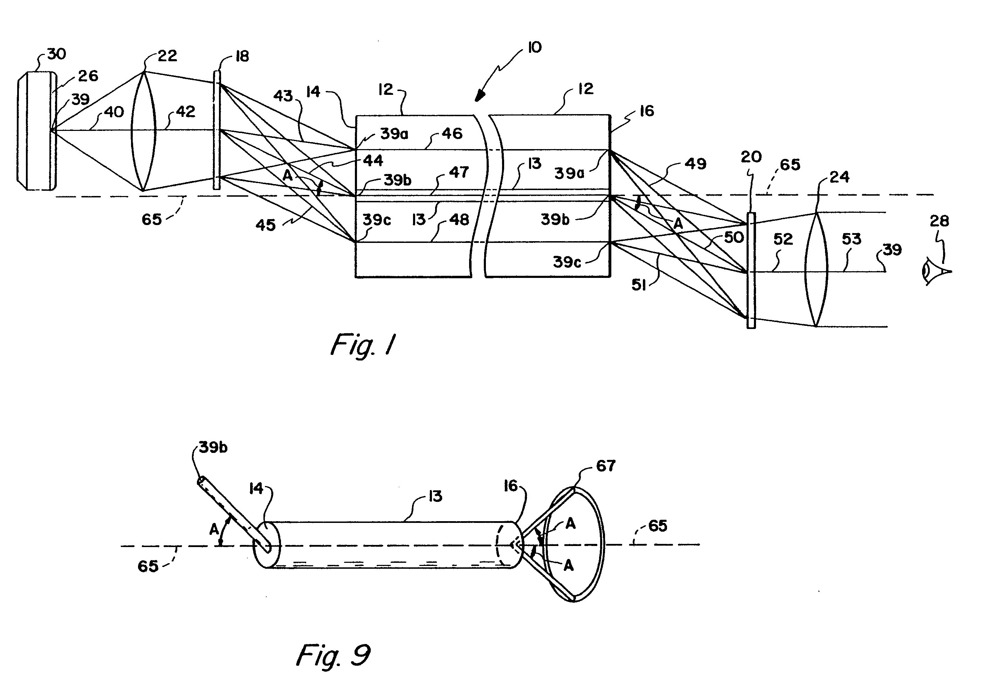

(57) For enhancing images transmitted by flexible fiber optics bundles the image is spectrally dispersed by a holographic optical element (18) for fiber optics (12) transmission and spectrally recombined by a holographic optical element (20) after fiber optics transmission. The arrangement eliminates the reception of blank spots and fixed pattern noise due to broken fibers and optical fiber boundaries and improves resolution of images transmitted by fiber optics bundles (Fig. 1).

Fig. 1

# IMAGE ENHANCEMENT FOR FIBER OPTICS TRANSMISSION

## BACKGROUND OF THE INVENTION

The present invention relates generally to an apparatus for enhancing image transmission in fiber optics image relay systems, and, more particularly, is concerned with the use of holographic optical elements in enhancing color images transmitted by a flexible fiber optics bundle.

Transmission of images by fibers optics relay systems has been put to considerable use such as in medical endoscopes and light weight video displays. However, several problems associated with quality transmission have been noted. The quality and resolution of images transmitted through fiber optics bundles have been generally improved by small-diameter fibers in a multi-fiber configuration. A multi-fiber consists of a number of optically distinct clad fibers fused into a single strand, but still thin enough to be flexible. Such bundles exhibit high resolution, but often show a gross pattern corresponding to the multi-fiber dimension (also called fixed pattern noise or the chicken wire effect). Additionally, any single broken multi-fiber removes a relatively large number of image points from the transmitted image.

Various techniques have been developed in the prior art to minimize these problems by spatially or spectrally spreading the light from a single image point over a number of fibers, i.e., redundant transmission. Spatial schemes move the fibers optics bundle rapidly in the image plane so that each image point is transmitted by different fibers in succession. Spectral schemes, such as multi-prism configurations, disperse the image prior to transmission through the fiber optics bundle and recombine the image after transmission. This technique allows different colors of each image point to be transmitted by different fibers. The results of such dispersion techniques are increased resolution, and the elimination of fixed pattern noise and spots due to broken fibers. These techniques work well, but have drawbacks which prevent their use in many display devices. Spatial schemes require power-consuming mechanical devices, while spectral - schemes often utilize prisms which are relatively large and heavy, and introduce image aberrations.

Another technique suggested in the prior art is the use of ruled diffraction gratings. Several advantages noted in using such diffraction gratings in lieu of prisms in a spectral dispersion scheme for enhancing fiber optics image transmission, are that the gratings are physically smaller and lighter. Further, ruled diffraction gratings provide greater spectral dispersion than prisms, permitting their use in narrower bandpass systems.

However, the use of ruled diffraction gratings has great disadvantages. These gratings do not have the advantage of zero deviation for one wavelength, as prisms can be designed to have. Zero deviation means that the center light beam path does not deviate in direction before the point of entry into the diffraction device and after the point of exit, i.e., the paths of the entering and exiting beams are parallel to each other, though not necessarily in line. To achieve zero deviation, the ruled gratings may be combined with refracting prisms or plane mirrors, resulting in a device as cumbersome as the prism configuration. Another principal disadvantage of the ruled grating is the presence of adjacent orders, which limits the useful angular field or size of the image to be relayed. Other disadvantages are ghosts and stray light.

Holographic optical elements (HOE's) have been used in many applications in the prior art. The characteristics, e.g., large dispersions, of HOE's were considered as problems rather than advantages in the prior art.

## SUMMARY OF THE INVENTION

The present invention overcomes the aforementioned disadvantages of ruled diffraction grating configurations and yet retains their advantages over prism configurations in fiber optic image relay systems. The apparatus of the present invention utilizes HOE technology for enhancing the image transmission of fiber optics bundle image relay systems. The invention therewith just uses those characteristics, e.g. large dispersion of HOE's, which formely were considered a main disadvantage of HOE's. Such properties of HOE's being advantageous in fiber optics transmission is a surprising development.

The HOE of the image enhancement apparatus is capable of zero deviation at one wavelength giving it the same advantage of a direct view prism which in itself is a combination of two or more prisms. A single prism by itself does not exhibit zero deviation; thus there is a need for a combination of prisms even if constructed as a single unit. The HOE apparatus does not have ghosts, which are common with ruled diffraction gratings. The stray light levels of HOE's are at least one order of magnitude lower than the best ruled gratings. Resolution is higher since it increases with a decrease in groove spacing which is limited by stray light levels in ruled gratings. Also, the HOE signal-to-noise levels are superior to the best ruled gratings.

A great advantage absent in ruled gratings is that the HOE's can contain aberration correction and optical power thus eliminating the need for ordinary optical components. HOE transmission efficiency is comparable to that for ruled gratings and is even higher for narrow spectral sources. HOE's are available in sizes much larger than ruled gratings. The prices of HOE's are now comparable to those of equivalent ruled gratings.

## BRIEF DESCRIPTION OF THE DRAWINGS

Figure 1 shows a lateral view of an embodiment of the present invention.

Figure 2 shows the source image.

Figure 3 shows some typical characteristics of HOE gratings at various orders of diffraction.

Figure 4 shows the image as it appears on entering end of the fiber optics bundle.

Figure 5 shows the image as it appears on the exiting end of the fiber optics bundle.

Figure 6 shows the transmitted image as it is seen by the recipient viewer when the HOE's are in place.

Figure 7 shows an example of the transmitted image as it is seen by the recipient viewer when the HOE's are not in place.

Figure 8 shows another embodiment of the invention.

Figure 9 shows an effect of a light beam obliquely entering an optic fiber.

Figure 10 shows a third embodiment of the invention.

## DETAILED DESCRIPTION OF THE PREFERRED EMBODIMENTS

In the following specification and drawings certain specific terminology will be utilized and particular embodiments described, however, it is to be understood that the invention is not so limited to the particular embodiments described, but is acceptable in a wide variety of applications within the scope of the invention.

The term "beam", as is used here, may refer to one or more rays.

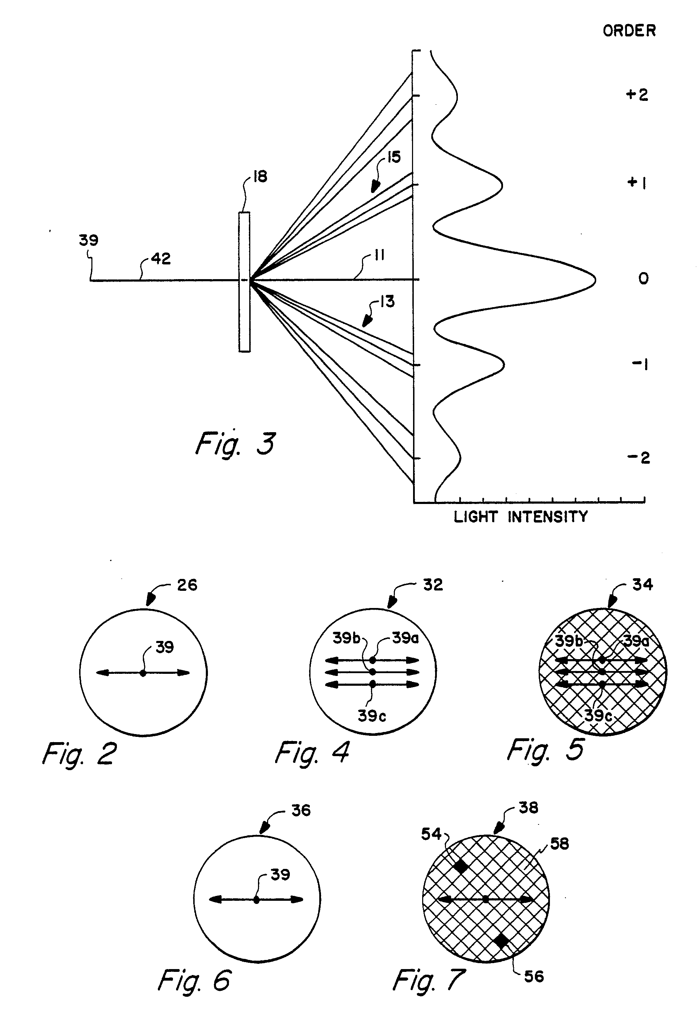

Figure 1 shows an embodiment of the invention, a holographic image enhancement apparatus 10. Image source 30 may be a CRT, a backlit slide or any other similar presentation. A pixel of a source image 26, also shown in Figure 2, is transmitted in the form of a light beam 39, follows an optical path 40, and is focused by a lens 22 onto an optical path 42. Light beam 39 along the optical path 42 impinges a holographic optical element (HOE) 18 and is dispersed by the HOE 18 into a plurality of light beams 39a, 39b and 39c of differing wavelengths along optical paths 43, 44 and 45, respectively.

The principle of diffraction of HOE 18 is illustrated in Figure 3. Light beam 39 following optical path 42, going through HOE 18 and following optical path 11, is in the zero order of diffraction, i.e., not diffracted, and results in the most magnitude of light intensity. Light beam 39 is diffracted spectrally, according to wavelengths, along a plurality of optical paths 15, is of the order plus one, having substantially a smaller magnitude of light intensity than the light along path 11 of the zero order. Diffracted light of HOE 18 decreases in magnitude of light intensity at higher orders, plus or minus, of diffraction. The embodiment of Figure 1 utilizes diffraction in the order of minus one where light beam 39, in Figure 3 follows optical path 42, is diffracted by HOE 18 spectrally, according to wavelengths, along optical paths 13. Optical paths 13 of Figure 3 correspond to optical paths 43, 44 and 45 of Figure 1.

In Figure 1, light beams 39a, 39b and 39c impinge on an end surface 14 of a fiber optics bundle 12. Image 32, as impressed on the end 14 of the fiber optics bundle 12, is illustrated in Figure 4. The light beams 39a, 39b and 39c from optical paths 43, 44 and 45, follow a plurality of optical paths 46, 47 and 48 through the fiber optics bundle 12 to an end surface 16. A resultant image 34, on the end surface 16 of the fiber optics bundle 12, is illustrated in Figure 5. From the end surface 16, the light beams 39a, 39b and 39c follow a plurality of optical paths 49, 50 and 51 to an HOE 20 where they are recombined into the light beam 39 which follows an optical path 52 to a collimating lens 24. The collimated light beam 39 follows an optical path 53 to compose a pixel in an image 36 as illustrated in Figure 6 and viewed by an observer 28.

HOE 20 is similar in construction to the HOE 18 except that it is rotated 180° about the optical axis of the HOE 18 or about its axis parallel to the grating lines of HOE 20. HOE 20 functions in the minus one order as illustrated in Figure 3. Optical paths 49, 50 and 51 of Figure 1 corresponds to a group of optical paths 13 of Figure 3, however, assuming that light is travelling from right to left through HOE 20 on optical paths 13 and 42 in Figure 3. The operation of HOE 20 is the converse of that of HOE 18 in Figure 1.

Figure 7 illustrates an image 38 typically seen by observer 28 when the light of an image going through the fiber optics bundle 12 is not spectrally diffracted thus allowing the light beam of each pixel of the image to be transmitted through several fibers in the fiber optics bundle 12. A typical symptom of a non-diffracted image sent through the fiber optics bundle 12, is fixed pattern noise 58, or otherwise called the chicken wire effect, as illustrated in Figure 7. The fixed pattern noise 58 is due to the structure of fibers or bundles of them in the fiber optics bundle 12 viewed along with an image. Spots 54 and 56 of image 38 in Figure 7 are due to broken optical fibers. In Figure 1, HOE 18 causes the pixels of image 38 at spots 54 and 56 to be transferred through other fibers of the fiber optics bundle 12 down several paths such as paths 46, 47 and 48 by spectral spreading the light beams in a similar way that light beam 39 of the image pixel is transmitted through several fibers. Said in another way, pixels to be conveyed by fibers to spots 54 and 56 are conveyed at different wavelengths by unbroken fibers and recombined by HOE 20. Pixels of the image 38 in the areas of 54 and 56 are then reconstructed resulting in a clear image 36 as illustrated in Figure 6.

One may note that light beam 19 in Figure 1 following center optical paths 40, 42 and 44, does not enter the flat end 14 of fibers optics bundle 12 perpendicular to the surface 14. In principle, beam 39b transmitted by a fiber 13 in the fiber optics bundle 12 will remain in the same azimuthal plane throughout its passage, emerging at the same angle A to the longitudinal axis 65, as shown in Figures 1 and 9. As a practical matter, a light beam 39b of small, but finite diameter, in Figure 9, entering the flat end 14 at an angle A will gradually disperse in azimuth, because of the small skew components and the large number of reflections in the fiber 13, so as to fill annulus of a cone 67 of angle A to axis 65 upon leaving the fiber 13 of bundle 12. That effect results in a significant attenuation of the light beam 39b being transmitted through the fiber optics bundle 12.

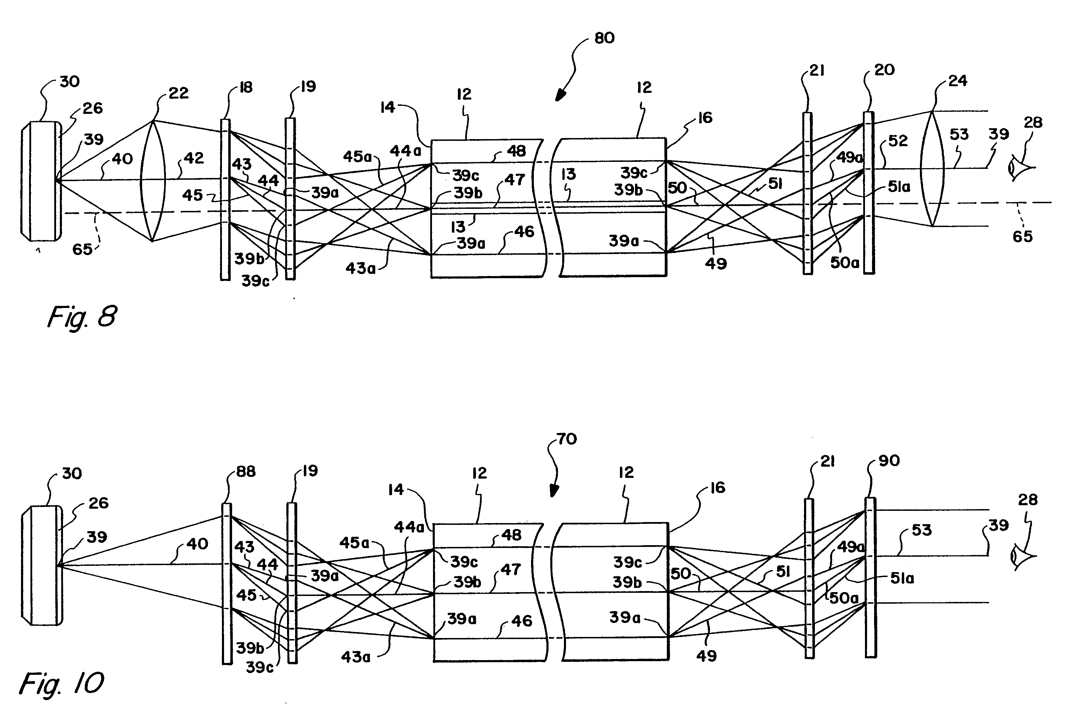

Embodiment 80 of Figure 8 substantially eliminates that potential problem of light beam attenuation in the embodiment 10 of Figure 1. For instance, in Figure 8, light beam 39b follows, among other paths, center optical paths 40, 42, 44 and 44a. Light beam 39b, following optical path 44a, enters the flat end surface 14 of the fiber optics bundle 12 perpendicular to end 14, i.e., at no angle to axis 65, thus avoiding a dispersal in azimuth. The entry angle A with respect to axis 65 is reduced to zero, i.e., maintaining zero deviation of center light beam 39b, by utilizing additional HOE diffraction gratings 19 and 21. Light beam 39b exits end surface 16 parallel to axis 65.

Mechanical design and alignment of the holographic image enhancement apparatus are facilitated. In embodiment 80, the optical paths 44a and 50 are parallel to axis 65. Also, this embodiment 80, as applied to a straight fibers optics bundle 12, has center optical paths 40, 42, 52 and 53 that are in line with one another.

In the embodiment 80's operation, light beam 39 follows optical path 40 through optics 22, onto path 42, and impinges upon HOE 18. Light beam 39 is spectrally diffracted into light beams 39a, 39b and 39c which follow optical paths 43, 44 and 45, respectively. This spectral diffraction is of the minus one order, as described above in conjunction with Figure 3. Light beams 39a, 39b and 39c, impinge HOE 19. HOE 19 diffracts light beams 39a, 39b and 39c, at different angles due to their differing wavelengths. Light beams 39a, 39b and 39c, having been already spectrally dispersed according to wavelength by HOE 18, follow optical paths 43a, 44a and 45a, and impinge on end surface 14 at various fibers. Light beams 39a, 39b and 39c follow optical paths 46, 47 and 48, respectively, through the fiber optics bundle 12 onto end surface 16. Light beams 39a, 39b and 39c, exit fiber optics bundle 12 at end surface 16, and follow optical paths 49, 50 and 51, to HOE 21. HOE 21 diffracts light beams 39a, 39b and 39c at varying angles according to their wavelengths. The function of HOE 21 is the converse of HOE 19. HOE 21 is rotated 180° relative to the optical axis of HOE 19. Light beams 39a, 39b and 39c, follow optical paths 49a, 50a, 51a, and impinge HOE 20 at a single point. Light beams 39a, 39b and 39c, are recombined into light beam 39 at HOE 20, functioning conversely of HOE 18. Light beam 39 follows optical path 52 through imaging optics 24 onto optical path 53, and composes a pixel in image 36 to be viewed by observer 28.

Figure 10 shows another embodiment 70 which is a version of embodiment 80 in Figure 8. Due to advanced technology and development of HOE's, optical powers of the imaging lens 22 and the collimating lens 24 of Figure 8 may be incorporated in HOE's 88 and 90, respectively, in Figure 9. Light beam 39 of a pixel in source image 26 from source 30 follows an optical path 40 and is focused and diffracted by HOE 88. Similarly, as in the operation of embodiment 80, light beam 39 is diffracted into a plurality of light beams 39a, 39b and 39c of various wavelengths and follow a plurality of optical paths 43, 44 and 45, and impinge on HOE 19, which further diffracts light beams 39a, 39b and 39c, to follow optical paths 43a, 44a, 45a, respectively, and impinge on surface end 14 of the fiber optics bundle 12. Light beams 39a, 39b and 39c, go through fiber optics bundle 12 via a plurality of optical paths 46, 47 and 48, exit at surface end 16, and enter a plurality of optical paths 49, 50, and 51 to HOE 21, correspondingly. HOE 21 functions in the converse of HOE 19, similarly as in the embodiment 80 of Figure 8. HOE 21 diffracts light beams 39a, 39b, and 39c, which follow optical paths 49a, 50a, and 51a, and impinge on HOE 90. Light beams 39a, 39b and 39c are recombined into light beam 39 at HOE 90. Optical powers incorporated in HOE 90 collimate light beam 39 to follow a path 53 to compose a pixel in image 36 which is viewed by observer 28.

The embodiment of Figure 1 may be modified so as to eliminate the need of focussing lens and imaging lens 24 by replacing HOE 18 and HOE 20, respectively, with HOE 88 and HOE 90 as described in embodiment 70 of Figure 10. Optical powers designed into HOE 88 and HOE 90, thus eliminating lenses 22 and 24, result in an embodiment of the invention with very few components.

The HOE's in all of the embodiments described herein may be ordinary, blazed or other kinds. Blazed HOE's are designed for narrow bandwidths of light and optimized for efficiency at a certain order of diffraction. Ordinary HOE's may be preferred for wider bandwidth light transmission in fiber optics bundles. Other kinds of HOE's, with special features designed into them, may be utilized in the above illustrated and other embodiments of the invention as desired by the designer or user.

This invention is a novel utilization of HOE technology for image enhancement in fiber optics transmission. This system is not complex and may be easily and inexpensively produced. Many obvious alterations may occur to those skilled in the art and this invention should not be limited by the specific disclosures used in connection with the preferred embodiments.

## Claims

1. An image enhancement apparatus (10,80,70) for a fiber optics image relay system, **characterized by** spectral dispersion means (22,18,19,88) for holographically converting source images into spectrally dispersed images for transmission through said fiber optics image relay system (12); and spectral recombination means (24,20,21,90) for holographically recombining said spectrally dispersed images from said fiber optics image relay system into said source images.

2. The apparatus of claim 1, **characterized in that** said spectral dispersion means (22,18,19,88) and/or said spectral recombination means (24,20,21,90) comprises at least one holographic optical element HOE (18,19,88;20,21,90)

3. The apparatus of claim 2, **characterized by** first holographic optical element means (22,18,19,88) for optically focusing source images and for converting said source images into spectrally dispersed images for transmission through said fiber optics image relay system (12); and second holographic optical element means (24,20,21,90) for recombining said spectrally dispersed images from said fiber optics image relay system, into said source images, and for optically collimating said source images for reception (28).

4. The apparatus of claim 2 or 3, **characterized in that** said holographic optical element means (18,88;20,90) comprises a diffraction grating.

5. The apparatus of claim 1 or 2, **characterized in that** said spectral dispersion means (22,18,19,88) comprises two holographic diffraction gratings (18,19,88) for maintaining zero deviation of a center light beam during said spectral dispersion.

6. The apparatus of claim 1, 2 or 5, **characterized in that** said spectral recombination means (24,20,21,90) comprises two holographic diffraction gratings (20,21,90) for maintaining zero deviation of said center light beam during said spectral recombination.

7. The apparatus of claim 1, **characterized in that** said spectral dispersion means (22,18,19) comprises an optical element (22) for focusing said source images.

8. The apparatus of claim 1 or 7, **characterized in that** said spectral recombination means (24,20,21) comprises an optical element (24) for collimating said recombined source image for reception.

9. The apparatus of one of the claims 1 to 6, **characterized in that** said holographic optical dispersion means (88) comprises an optical means for focusing said image-forming light beam.

10. The apparatus of claim 9, **characterized in that** said holographic optical recombination means (90) comprises an optical means for collimating said recombined image-forming light beam.

11. The apparatus of claim 2, **characterized in that** said first (18,19;88) and second (20,21,90) holographic optical elements are positioned differently relative to the orientation of said set of plurality of spectrally dispersed beams (39a,39b,39c), e.g. rotated by 180°, so that said second holographic optical means spectrally recombines said plurality of spectrally dispersed beams.

12. An image transmission system comprising an apparatus according to one of the preceding claims, **characterized by** first holographic optical means (22,18,19,88) for dispersing an image-forming light beam (39) along a first singular optical path (40,42) into a set of plurality of spectrally dispersed beams (39a,39b,39c) along a first set of plurality of optical paths (43,44,45); a fiber optic bundle (12) having a plurality of optical fibers where said set of plurality of spectrally dispersed beams (39a,39b,39c) along said first set of plurality of optical paths (43,44,45) enters a first end (14) of said bundle and is transmitted through said bundle along a second set of plurality of optical paths (46,47,48), and exits from a second end (16) of said bundle to a third set of plurality of optical paths (49,50,51) and

second holographic optical means (24,20,21,90) for recombining said set of plurality of spectrally dispersed beams from along said third set of plurality of optical paths (49,50,51) into said image-forming light beam (39) along a second singular optical path (52,53).

13. The system of claim 12 comprising an apparatus according to claim 5, **characterized in that** said first holographic optical element means (22,18,19,88) comprises at least two diffraction gratings (18,19,88) for spectral dispersion of said light beam (39) along said first singular optical path (40,42), such that a light beam (42) along a center optical path (44a) of said first set of plurality of optical paths, is parallel to said light beam along said first singular optical path (40,42).

14. The system of claim 12 or 13 comprising an apparatus according to claim 6, **characterized in that** said second holographic optical element means (24,20,21,90) comprises at least two diffraction gratings (20,21,90) for spectral recombination of said light beams along said third set of plurality of optical paths (49,50,51) wherein a light beam along a center optical path (50) of said third set of plurality of optical paths, is parallel to said light beam along said second singular optical path (52,53).

15. A method of enhancing images in a fiber optics relay system, comprising the steps of:

separating at least one image light beam into spectral components, by a first holographic means (18,19,88);

transmitting said spectral components from said first holographic means through a fiber optics bundle (12); and

combining said spectral components from said bundle into at least one said image light beam by a second holographic means (20,21,90).

Fig. 1

Fig. 9

0 275 947

ORDER

+2

+1

0

-1

-2

Fig. 3

LIGHT INTENSITY

Fig. 2

Fig. 4

Fig. 5

Fig. 6

Fig. 7

0 275 947

**Fig. 8**

**Fig. 10**